# EUROPEAN PATENT APPLICATION

(11) **EP 4 803 268 A1**
(43) Date of publication of application: **09.09.2026**
(21) Application number: 26151973.0
(22) Date of filing: 15.01.2026
(51) Int. Cl.: B25J 9/16

(54) **OBJECT RECOGNITION SYSTEM FOR PICKING UP ITEMS**

(30) Priority: 06.03.2025 US 202519072595
(71) Applicant: Hitachi, Ltd., Tokyo 100-8280 (JP)
(72) Inventor: KIMURA, Nobutaka, Tokyo, 100-8280 (JP)
(74) Representative: Manitz Finsterwald Patent- und Rechtsanwaltspartnerschaft mbB

(57) **Abstract**

An object loading method comprising measuring, by a processor, distances between a first sensor and a plurality of objects using the first sensor; identifying, by the processor, a target object of the plurality of objects based on the distances; controlling, by the processor, a gripper to grasp the target object; receiving, by the processor, a first image of the plurality of objects from a side view from a second sensor at a first position; controlling, by the processor, the gripper to move upward by a predetermined distance; receiving, by the processor, a second image of the plurality of objects from the side view from the second sensor at the first position; and detecting, by the processor, existence of a target object difference area between the target object and other objects of the plurality of objects by comparing the first image and the second image.

## Description

### BACKGROUND

### Field

The present disclosure is generally directed to methods and systems for performing object loading recognition associated with a plurality of objects.

### Related Art

Demand for automating physical operations in warehouses has been on the rise due to aging labor forces and increased volatility of the labor market. For automating warehouse operations (e.g., object/product loading, depalletization, etc.), autonomously controlled robots with manipulator and vision system have been utilized in performing such tasks/operations. In order for the automation systems to perform action planning for the manipulators, the size, position, and orientation of the products would first need to be identified and recognized before actions can be performed on the products. However, information such as product types and product arrangements cannot be preliminarily received by the automation systems in advance.

In the related art, a method utilizing a vision system mounted directly above a target pallet for capturing intensity and/or depth image data of objects is disclosed. The vision system measures only top surfaces of products/objects situated at the highest layer on the pallet to derive 2D sizes, 3D positions, and 3D orientations of top surfaces of visible products. However, such vision system is unable to recognize height dimensions of the products, which is critical in preventing object collision while products are being manipulated. Specifically, without height dimensions of the products, after a target object has been grasped, a depalletizer must raise its gripper by an assumed object's height dimension every time so that the grasped object does not collide with other objects.

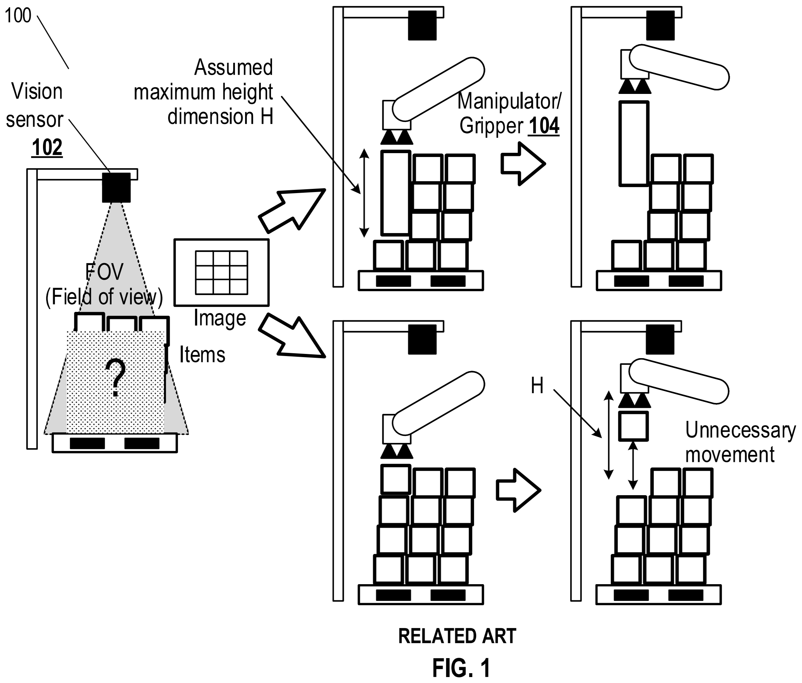

FIG. 1 illustrates a conventional depalletizer system 100. As shown in FIG. 1, a vision system/sensor 102 is used to capture intensity and/or depth image of objects on a pallet. A manipulator/gripper 104 is used for grasping and moving objects on the pallet. If the height dimension of the grasped object is shorter than an assumed maximum height dimension H, this leads to the manipulator/gripper 104 raising the grasped object to a height beyond what is needed, which leads to decreased throughput in depalletization. Furthermore, when the height dimension of the grasped object is longer than the assumed maximum height dimension H, this may require the depalletizer to reperform object selection/picking to prevent occurrence of object collision.

In the related art, a method utilizing a vision sensor mounted directly above a target pallet for capturing before and after images is disclosed. The method provides a way for estimating a target object that has been picked up by a depalletizer using a single vision sensor mounted directly above the pallet. The vision sensor captures a first image and a second image before and after a target object has been picked up by a manipulator, respectively. Subsequently, a height dimension of the target object is estimated by calculating a height difference between the first image and the second image based on horizontal positions of the target object.

However, the manipulator must be kept away from the field of view of the vision sensor for the second image captured. Therefore, the height dimension of the grasped object cannot be estimated until the depalletizer finishes raising the gripper, which leads to unnecessary actions/movements to be performed.

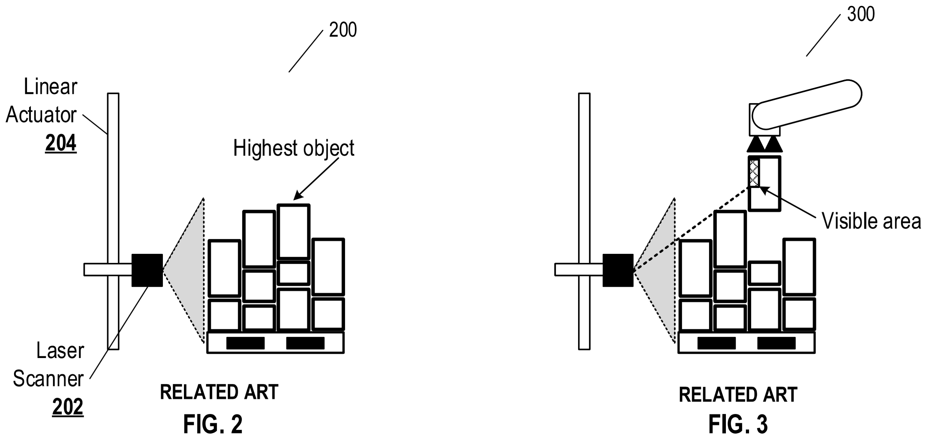

In the related art, a method utilizing a laser scanner with a linear actuator for performing object detection is disclosed. FIG. 2 illustrates a conventional depalletizer system 200 that utilizes a laser scanner 202. The laser scanner 202 is positioned to horizontally emit a beam of light in an angular range and measures distances to the objects. By being mounted to a linear actuator 204, the laser scanner 202 moves vertically along the linear actuator 204. The combination of the laser scanner 202 and the linear actuator 204 allows object detection to be performed on objects by measuring side surfaces of the objects on the pallet.

However, a costly high-precision laser scanner would be required to recognize object height dimensions since gaps between vertically-piled objects can be narrow and difficult to detect. Additionally, if the highest object is enclosed by surrounding objects as shown in FIG. 2, the laser scanner 202 is unable to measure the entire side surface of the highest object. In such a scenario, the depalletizer would not be able to determine the height dimension of the highest object until it has been grasped and raised by a gripper.

In the related art, a method for performing object surface measurement on a grasped target object is disclosed. The method discloses a robot that measures side surface(s) of the grasped target object through use of a range finder from a side view. The method further assumes that the grasped target object is always isolated from surrounding objects. However, in real-life scenarios, target objects are often enclosed by surrounding objects. FIG. 3 illustrates a conventional depalletizer system 300 with a target object surrounded by other objects. If a gripper is not raised sufficiently high, it is highly likely that a vision sensor would incorrectly measure the height dimension of the grasped object due to object occlusion as shown in FIG. 3.

The depalletizer system simply does not know in advance how high the gripper should be raised since there is no information about the target object's height dimension in advance. Therefore, the depalletizer system must control and raise the gripper based on the assumed maximum height dimension such that the grasped object could be isolated from surrounding objects, which can be excessive and unnecessary.

There exists a need for a depalletizer that is capable of acquiring a target object's height dimension before further operations can be performed to avoid unnecessary actions.

### SUMMARY

Aspects of the present disclosure involve an innovative method for performing object loading associated with a plurality of objects. The method may include measuring, by a processor, distances between a first sensor and a plurality of objects using the first sensor; identifying, by the processor, a target object of the plurality of objects based on the distances; controlling, by the processor, a gripper to grasp the target object; receiving, by the processor, a first image of the plurality of objects from a side view from a second sensor at a first position; controlling, by the processor, the gripper to move upward by a predetermined distance; receiving, by the processor, a second image of the plurality of objects from the side view from the second sensor at the first position; detecting, by the processor, existence of a target object difference area between the target object and other objects of the plurality of objects by comparing the first image and the second image; and for the target object difference area being detected, controlling, by the processor, the gripper to move the target object to a destination area.

In some example implementations, the method may further include, for the target object difference area not being detected, iteratively performing the following until the target object difference area is detected: controlling, by the processor, the gripper to move upward by the predetermined distance; receiving, by the processor, a subsequent image of the plurality of objects from the side view from the second sensor at the first position; and detecting, by the processor, existence of the target object difference area between the target object and the other objects of the plurality of objects by comparing the first image and the subsequent image; and for the target object difference area being detected, controlling, by the processor, the gripper to move the target object to the destination area.

In some example implementations, the processor is configured to control the gripper to move the target object to the destination area by determining whether the target object difference area satisfies a distance threshold; for the target object difference area being determined to satisfy the distance threshold, moving the target object to the destination area; and for the object difference area being determined to be less than the distance threshold, raising the target object upward until the distance threshold is met, and moving the target object to the destination area.

In some example implementations, the method may further include calculating, by the processor, a height dimension of the target object; receiving, by the processor, height information of the destination area; and adjusting, by the processor, height of the gripper based on the height dimension of the target object and the height information of the destination area before moving the target object to the destination area.

In some example implementations, the method may further include estimating, by the processor, a height of the gripper through information generated through monitoring of the gripper using the second sensor, and setting, by the processor, an area of the second image that is above the height of the gripper as an ignored area; wherein the detecting the existence of the object difference area between the target object and the other objects of the plurality of objects comprises detect the existence of the object difference area is performed by comparing the first image and an area of the second image that is not the ignored area.

In some example implementations, the method may further include detecting, by the processor, visibility of a front edge of the target object using the second sensor after the target object has been grasped by the gripper; wherein the receiving the first image of the plurality of objects from the side view using the second sensor at the first position comprises: for the front edge of the target object being detected, capturing an image of the plurality of objects as the first image; and for the front edge of the target object not being detected: controlling the gripper to raise the target object until the second sensor detects the front edge of the target object; and capturing an image of the plurality of objects as the first image.

Aspects of the present disclosure involve an innovative non-transitory computer readable medium, storing instructions for performing object loading associated with a plurality of objects. The instructions may include measuring distances between a first sensor and a plurality of objects using the first sensor; identifying a target object of the plurality of objects based on the distances; controlling a gripper to grasp the target object; receiving a first image of the plurality of objects from a side view from a second sensor at a first position; controlling the gripper to move upward by a predetermined distance; receiving a second image of the plurality of objects from the side view from the second sensor at the first position; detecting existence of a target object difference area between the target object and other objects of the plurality of objects by comparing the first image and the second image; and for the target object difference area being detected, controlling the gripper to move the target object to a destination area.

Aspects of the present disclosure involve an innovative server system for performing object loading recognition associated with a plurality of objects. The system may include a first sensor above the plurality of objects for measuring distances between the first sensor and the plurality of objects; a second sensor for monitoring the plurality of objects from a side view; a gripper for grasping the plurality of objects; a processor; and a memory coupled to the processor, wherein the memory stores instructions executable by the processor to: measure the distances using the first sensor; identify a target object of the plurality of objects based on the distances; control the gripper to grasp the target object; capture a first image of the plurality of objects from the side view using the second sensor at a first position; move the gripper upward by a predetermined distance; capture a second image of the plurality of objects from the side view using the second sensor at the first position; detect existence of a target object difference area between the target object and other objects of the plurality of objects by comparing the first image and the second image; and for the target object difference area being detected, control the gripper to move the target object to a destination area.

In some example implementations, the processor may be further configured to perform the following until the target object difference area is detected: move the gripper upward by the predetermined distance; capture a subsequent image of the plurality of objects from the side view using the second sensor at the first position; and detect existence of the target object difference area between the target object and the other objects of the plurality of objects by comparing the first image and the subsequent image; and for the target object difference area being detected, control the gripper to move the target object to the destination area.

In some example implementations, the processor may be configured to control the gripper to move the target object to the destination area by: determine whether the target object difference area satisfies a distance threshold; for the target object difference area being determined to satisfy the distance threshold, controlling the gripper to move the target object to the destination area; and for the object difference area being determined to be less than the distance threshold, controlling the gripper to raise the target object upward until the distance threshold is met, and move the target object to the destination area.

In some example implementations, the processor may be further configured to calculate height dimension of the target object; receive height information of the destination area; and adjust height of the gripper based on the height dimension of the target object and the height information of the destination area before moving the target object to the destination area.

In some example implementations, the processor may be further configured to estimate a height of the gripper through information generated through monitoring of the gripper using the second sensor, and set an area of the second image that is above the height of the gripper as an ignored area;

In some example implementations, the processor may be further configured to detect visibility of a front edge of the target object using the second sensor after the target object has been grasped by the gripper.

In some example implementations, the processor may be configured to capture the first image of the plurality of objects from the side view using the second sensor at the first position by: for the front edge of the target object being detected, capture the first image of the plurality of objects; and for the front edge of the target object not being detected: control the gripper to raise the target object until the second sensor detects the front edge of the target object; and capture the first image of the plurality of objects.

In some example implementations, the system may further include a linear slider, wherein the second sensor is coupled to the linear slider and is moved linearly by the linear slider.

### BRIEF DESCRIPTION OF DRAWINGS

A general architecture that implements the various features of the disclosure will now be described with reference to the drawings. The drawings and the associated descriptions are provided to illustrate example implementations of the disclosure and not to limit the scope of the disclosure. Throughout the drawings, reference numbers are reused to indicate correspondence between referenced elements.
FIG. 1 illustrates a conventional depalletizer system 100.
FIG. 2 illustrates a conventional depalletizer system 200 that utilizes a laser scanner 202.
FIG. 3 illustrates a conventional depalletizer system 300 with a target object surrounded by other objects.
FIG. 4 illustrates an example system architecture 400 of a depalletization system, in accordance with an example implementation.
FIG. 5 illustrates an example process flow 500 for performing object detection and depalletization using the depalletization system of FIG. 4, in accordance with an example implementation.
FIG. 6 illustrates an example illustrative flow 600 of the process flow 500, in accordance with an example implementation.
FIG. 7 illustrates an example illustrative flow 700 of the process flow 500 where a second highest object is directly behind a target object, in accordance with an example implementation.
FIG. 8 illustrates an alternate example process flow 800 for performing object detection and depalletization, in accordance with an example implementation.
FIG. 9 illustrates an alternate example process flow 900 for performing object detection and depalletization, in accordance with an example implementation.
FIG. 10 illustrates an example problem scenario in which a second vision sensor having a wide field of view is utilized.
FIG. 11 illustrates an example illustrative flow 1100 where an ignored area is set, in accordance with an example implementation.
FIG. 12 illustrates an example problem scenario where a second vision sensor fails to detect a difference area that appears in an ignored area.
FIG. 13 illustrates an example illustrative flow 1300 where an ignored area is set based on front edge detection of a target object, in accordance with an example implementation.
FIG. 14 illustrates an alternate example process flow 1400 for performing object detection and depalletization, in accordance with an example implementation.
FIG. 15 illustrates example illustrative flows (a)-(d) for performing the process flow 1400, in accordance with an example implementation.
FIGS. 16(a) and 16(b) illustrate an example problem scenario where a difference area cannot be correctly detected based on location of the second vision sensor.
FIGS. 17(a), 17(b), and 17(c) illustrate an example system architecture 1700 of a depalletization system utilizing a linear actuator, in accordance with an example implementation.
FIG. 18(a) illustrates a first scenario where the second vision sensor is properly positioned/arranged for object detection.
FIG. 18(b) illustrates a second scenario where the second vision sensor is properly positioned/arranged for object detection.
FIG. 18(c) illustrates a third scenario where the second vision sensor is properly positioned/arranged for object detection.
FIG. 19 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of the ordinary skills in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

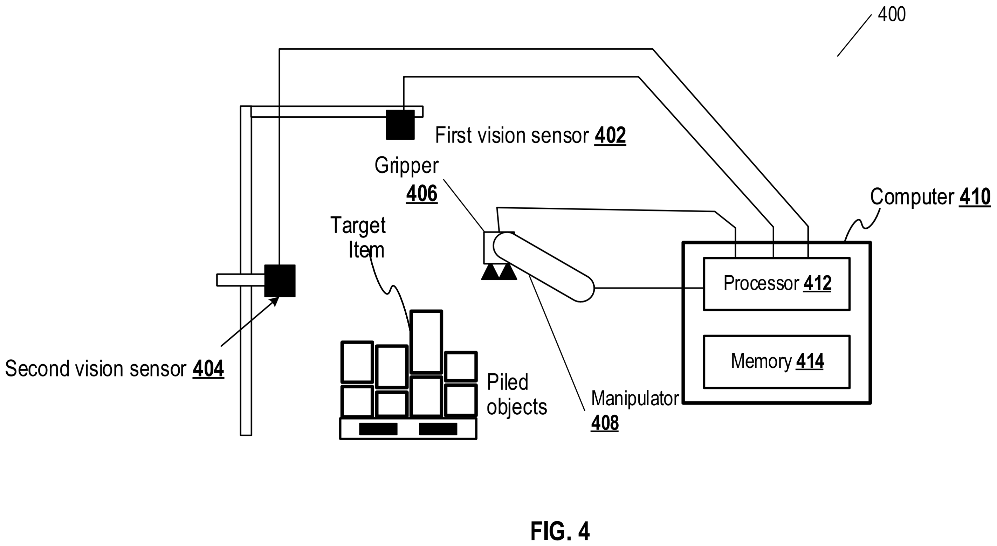

FIG. 4 illustrates an example system architecture 400 of a depalletization system for performing object loading recognition, in accordance with an example implementation. As illustrated in FIG. 4, the system architecture 400 may include components such as, but not limited to, a first vision sensor 402, a second vision sensor 404, a gripper 406, a manipulator 408, a computer 410, etc. The depalletization system may be used to perform object/product depalletization on objects/products placed on a pallet.

The first vision sensor 402, positioned above the piled objects, may be used to measure distances from the first vision sensor 402 to the surfaces of the piled objects in the field of view. The first vision sensor 402 may be a sensor such as, but not limited to, a TOF (time of flight) camera, stereo camera, etc. The second vision sensor 404 may be used to capture images of the piled objects from a side view. The second vision sensor 404 may be any sensor capable of capturing depth images (e.g., depth camera) or intensity images.

The gripper 406 can be used to pick up a target object from the pallet. For example, the gripper 406 may utilize one or more functions such as suction or pinching to pick up the target object. In this figure, the gripper grasps the target object by suctioning it. The manipulator 408, which the gripper is attached to, can be controlled to move the gripper 406. The manipulator 408 may be a robot such as, but not limited to, an articulated robot with plurality degrees of freedom, a SCARA (Selective Compliance Articulated Robot Arm) robot, a Cartesian coordinate robot, etc.

The computer 410 is a computing device that communicates with and controls the first vision sensor 402, the second vision sensor 404, the gripper 406, and the manipulator 408. The computer 410 may any device such as, a mobile device (e.g. smartphones, devices in a machine, tablets, notebooks, laptops, personal computers, etc.), and a device not designed for mobility (e.g. desktop computers, information kiosks, etc.) that are capable of wired or wireless communication.

The computer 410 may include components such as, but not limited to a processor 412, a memory 414, etc. The processor 412 may be used to execute instructions stored in the memory 414 for performing operations associated with object detection and depalletization. Data as generated and received from the first vision sensor 402, the second vision sensor 404, the gripper 406, and the manipulator 408 may be stored in the memory 414 for processing by the processor 412. The memory 414 may be one or more memory devices such as, but not limited to, Read Only Memory (ROM), Random Access Memory (RAM), Solid-state Storage Drives (SSD), Hard Disk Drives (HDD), etc.

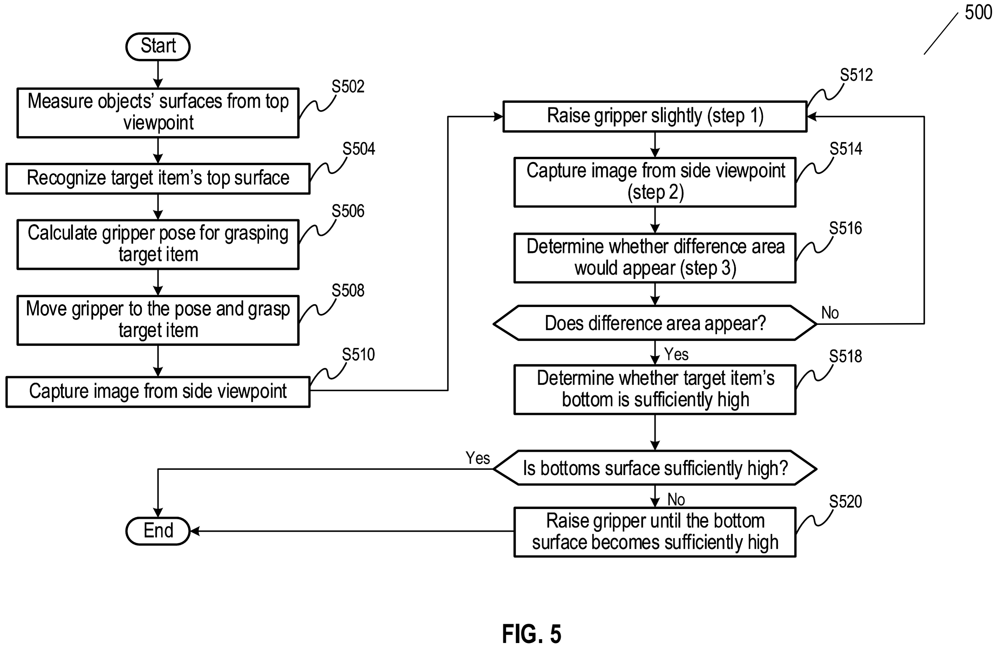

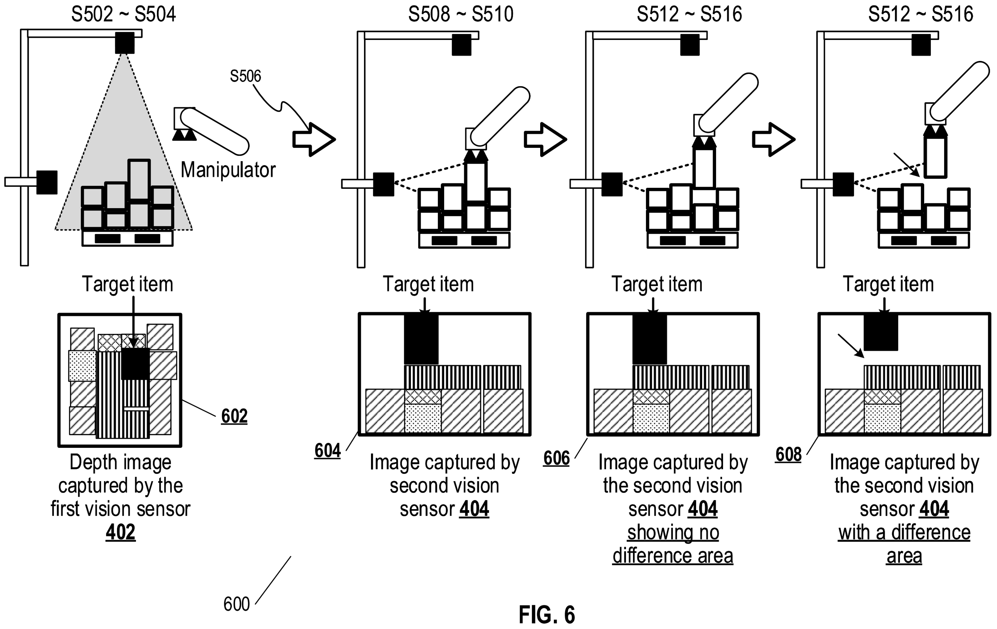

FIG. 5 illustrates an example process flow 500 for performing object detection and depalletization using the depalletization system of FIG. 4, in accordance with an example implementation. the flow chart of the minimum process sequence of the system of this invention described in claim 1. Firstly, the system measures the surfaces of the objects using the first vision sensor 402 at step S502. FIG. 6 illustrates an example illustrative flow 600 of the process flow 500, in accordance with an example implementation. The measured surfaces may be represented as a depth image 602 as shown in FIG. 6. The heights of the objects are represented by different shades of darkness (e.g. grayscale). In some example implementations, the heights of the objects may be color-coded. In alternate example implementations, the various height ranges may be represented through patterns.

The process then continues to step S504 where the system selects the highest area in the depth image as a target object/object and recognizes the top surface of the target image using the measurement result. At step S506, the system then calculates a gripper's (gripper 406) 3D position and 3D orientation for grasping the target object. If the gripper includes a suction surface, When the gripper utilizes a suction surface for grasping the target object, the target object's top surface may be set as the center position and the normal vector of the suction surface. At step S508, the system then moves the gripper 406 to the calculated pose (position and orientation) and uses the gripper 406 to grasp the target object. In some example implementations, the target object is an object having a shortest distance to the first vision sensor.

After the target object has been grasped, the system then captures an image as a "before-movement" image using the second vision sensor 404 at step S510. Image 604 of FIG. 6 shows the piled objects as captured form a side view. The process then proceeds to step S512 where the gripper 406 is raised slightly to allow an "after- movement" image to be captured using the second vision sensor 404 at step S514. At step S516 a determination is made as to whether a difference area appears between the before-movement image and the after-movement image appear. Image 606 illustrates the scenario where no difference area is detected. As shown in image 606, while the gripper has been elevated, the bottom part of the target object is still occluded by the object in front of the target object, which resulted in no difference area being detected. If a difference area could not be detected, the process then returns to step S512, and steps S512 to S516 are performed iteratively until a difference area appears.

Image 608 illustrates the scenario where a difference area becomes visible for the second vision sensor 404 and is detected by the system. The height of the bottom surface can then be calculated based on the recognized horizontal position of the target object and the difference area's position in the image captured by the second vision sensor 404. Using the height of the target object's bottom surface and the depth image captured by the first vision sensor 402 in at S502, the system then determines whether the target object's bottom surface would be sufficiently high for moving the target object away without colliding into other objects at step S518. For example, the system can know the height of the tallest surface among remaining objects on the pallet using the depth image or the results of object recognition. If the answer is yes at step S518, then the object is moved and the process comes to an end. If the answer is no at step S518, then the gripper 406 is raised until the height of the target object's bottom surface becomes sufficiently high at step S520. Specifically, the gripper 406 is raised until the height of the target object's bottom surface exceeds heights of remaining objects on the pallet.

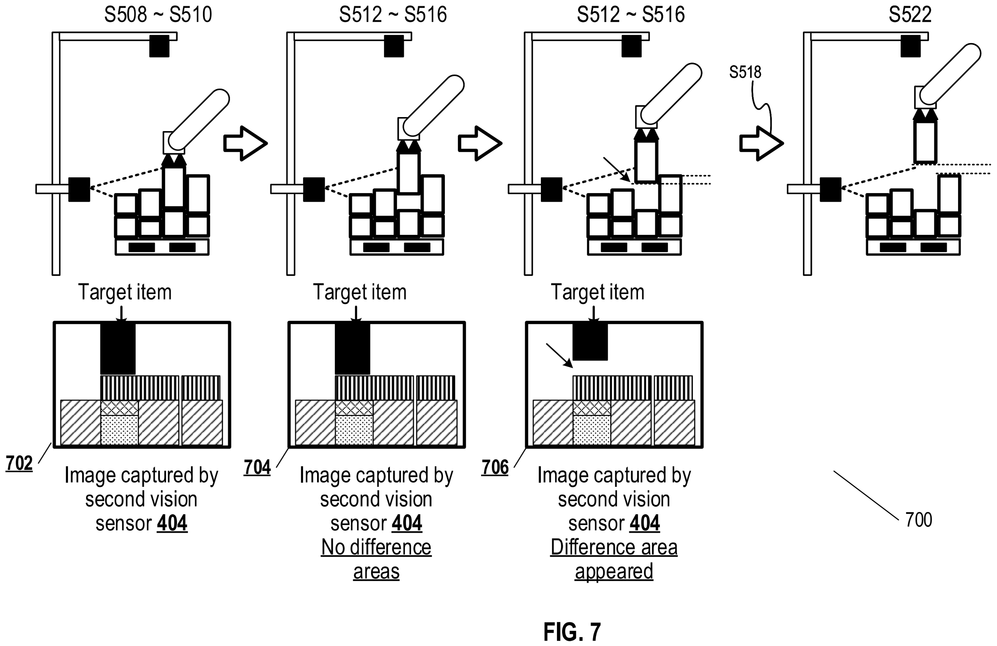

FIG. 7 illustrates an example illustrative flow 700 of the process flow 500 where a second highest object is directly behind a target object, in accordance with an example implementation. As illustrated in FIG. 7, the second highest object is situated behind the target object (images 702 and 704), and there is a risk that the target object might collide with the second highest object if the manipulator starts moving the grasped target object. As shown in image 706, even with the appearance of the difference area, the target object may still collide with the second highest object when moved. The system may further determine the risk based on a relationship between heights of the target object's bottom surface and the second highest object's top surface (as described in step S518). If it is determined that the height of the target's bottom surface does not exceed the height of the second highest object's top surface, the system then further raises the target object until the height of the target's bottom surface exceeds the height of the second highest object's top surface.

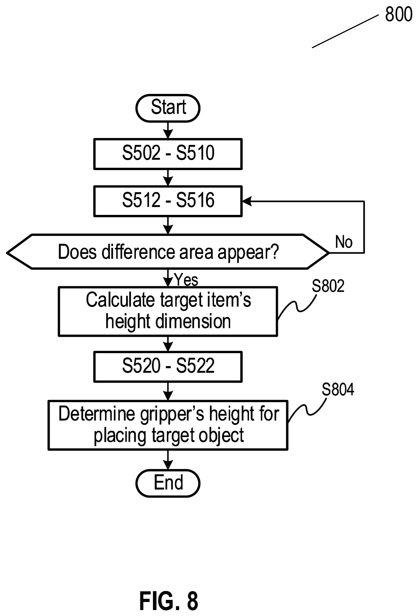

FIG. 8 illustrates an alternate example process flow 800 for performing object detection and depalletization, in accordance with an example implementation. Steps S502-520 are identical to the same steps performed in FIG. 5. Information about the grasped object is useful for not only determining how high the system raises the gripper during the pickup motion but also determining how close to the destination surface the system moves the gripper in the placement motion. For determining the gripper's height just before releasing the grasped object, the system may further calculate the target object's height dimension based on the gripper's height and a distance of the difference area's height when the difference area appears at step S802. Using the calculated height dimension of the target object and height information of the destination location where the target object will be placed, the system further determines the gripper's height just before displacement of the target object is initiated at step S804.

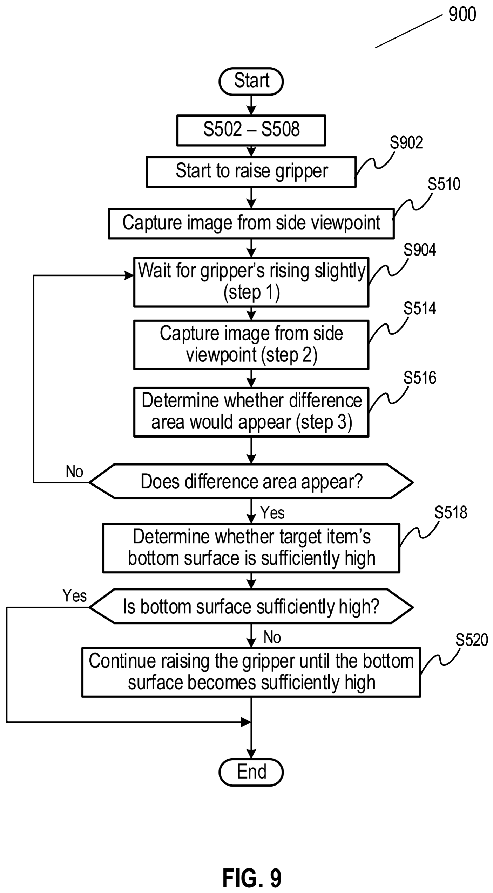

FIG. 9 illustrates an alternate example process flow 900 for performing object detection and depalletization, in accordance with an example implementation. Steps S502-S508, S510, and S514-S518 are identical to the same steps performed in FIG. 5. The process begins with steps S502-S508 being performed to grasp a target object. At step S902, the system begins raising the gripper and an image is captured from the side view at step S510.

The process then proceeds to step S904 where the gripper is raised slightly to allow an "after- movement" image to be captured using the second vision sensor at step S514. Unlike FIG. 5, the gripper is raised continuously until the process comes to an end. At step S516 a determination is made as to whether a difference area appears between the before-movement image and the after-movement image appear. If a difference area could not be detected, the process then returns to step S904, and steps S904 and S514-S516 are performed iteratively until a difference area appears.

After the system determines that a difference area has appeared based on the captured side view image in step S516, the system then determines whether the target object's bottom surface would be sufficiently high for moving the target object away without colliding into other objects at step S518. For example, the system can know the height of the tallest surface among remaining objects on the pallet using the depth image or the results of object recognition. If the answer is yes at step S518, then the system stops raising the gripper, and the target object is moved. If the answer is no at step S518, then the gripper is continuously raised until the height of the target object's bottom surface becomes sufficiently high at step S520. Specifically, the gripper is raised until the height of the target object's bottom surface exceeds heights of remaining objects on the pallet.

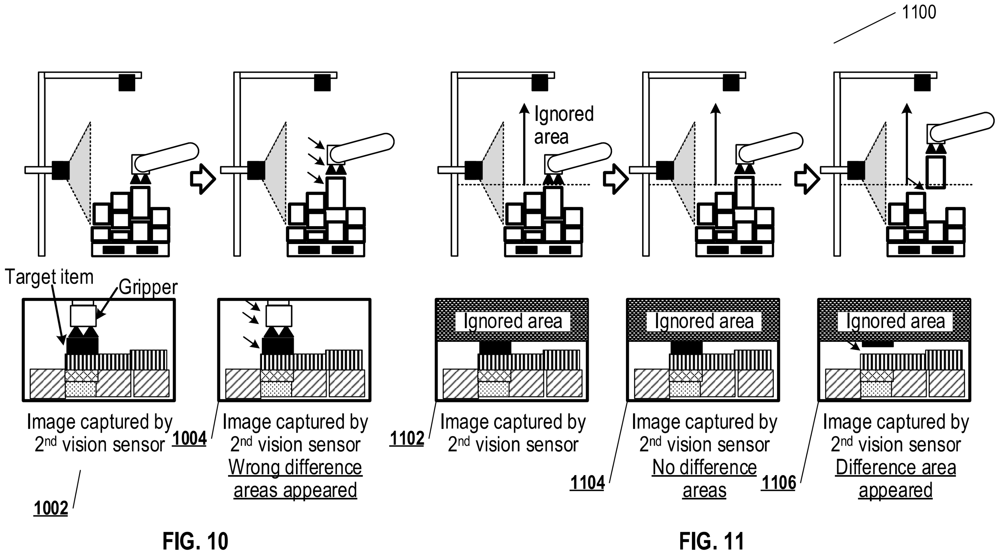

In some example implementations, for detecting difference areas being at various heights, it may be desirable to utilize a second vision sensor that has a wide field of view. FIG. 10 illustrates an example problem scenario in which a second vision sensor having a wide field of view is utilized. As illustrated in FIG. 10, the gripper may come into the field of view of the second vision sensor when a target object is being grasped (image 1002). Subsequently, the system raises the gripper, which causes multiple areas that correspond to parts of the gripper to be incorrectly detected as difference areas in the captured images as shown in image 1004.

To overcome the problem identified in FIG. 10, an area in the images captured by the second vision sensor may be set as an ignored area, where monitoring and tracking is not performed. Specifically, the system sets an ignored area in images captured by the second vision sensor based on the gripper's height at the time when the system initiates difference area detection. The system sets an area that exceeds the height of the gripper in the images as the ignored area. FIG. 11 illustrates an example illustrative flow 1100 where an ignored area is set, in accordance with an example implementation. Image 1102 shows an ignored area being set after a height of the gripper is determined. The system calculates the gripper's height from information derived using images captured by the second vision sensor. Such information may include one or more of (i) the actual position of the gripper; (ii) the position of the second vision sensor orientation; (iii) the field of view of the second vision sensor; or (iv) the image resolution of the second vision sensor. By introducing the ignored area, detection errors and amount of sensor data to be processed can be significantly reduced. As shown in images 1104 and 1106 of FIG. 11, difference areas can be accurately detected without the need to review and process sensor data contained in the ignored area.

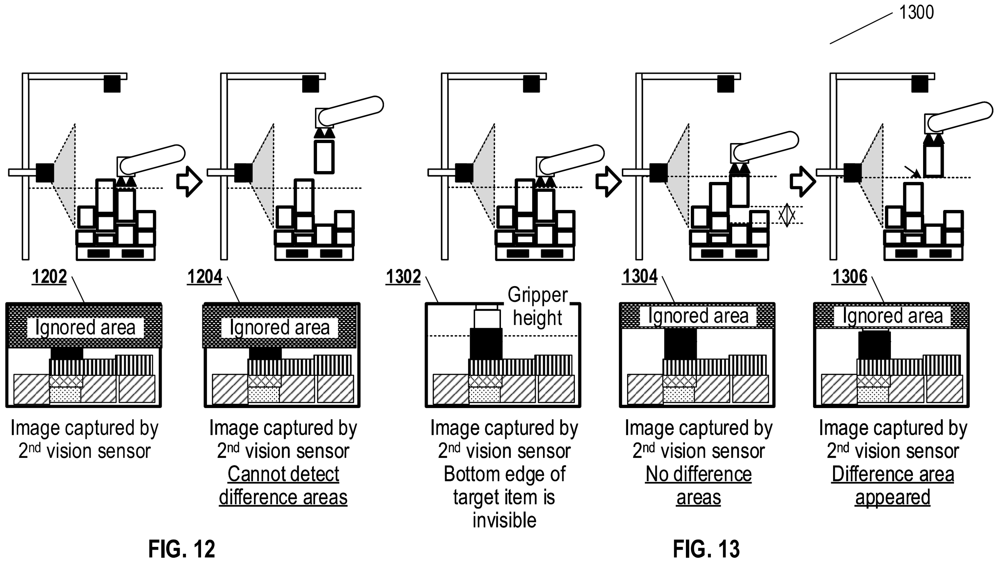

However, introduction of the ignored area may also create an additional problem. FIG. 12 illustrates an example problem scenario where a second vision sensor fails to detect a difference area that appears in an ignored area. When a front edge of the target object is occluded by other objects as shown in image 1202, the difference area would not be detectable if the ignored area is set based on a height of the gripper at the time of target object grasping (image 1204).

FIG. 13 illustrates an example illustrative flow 1300 where an ignored area is set based on front edge detection of a target object, in accordance with an example implementation. FIG. 13 illustrates how the problem identified in FIG. 12 may be overcome. After the target object has been grasped, the gripper would need to be preliminarily raised such that the front edge of the target object becomes visible to the second vision sensor before the first before-movement image is captured. As shown in image 1302, the bottom edge of the target object is not visible at this point.

The amount of preliminary motion can be calculated based on the results of object arrangement recognition. For each of the surrounding objects that is in front of the target object, a vertical pole that corresponds to a top surface of the object may be set. A determination is then made to see whether a vertical pole occludes the front edge of the target object from the perspective of the second vision sensor based on a calculation of perspective projection. If a vertical pole occludes the front edge of the target object, a determination is then made to see whether the minimum height of the target object's top surface is visible by raising the target object. The determination is made based on images generated from the second vision sensor.

After preliminarily raising the target object, the system captures the first before-movement image, and sets an ignored area based on the gripper's height at the time the first before-movement image is captured (image 1304). This allows the difference area to be properly detected outside the ignored area as can be seen in image 1306.

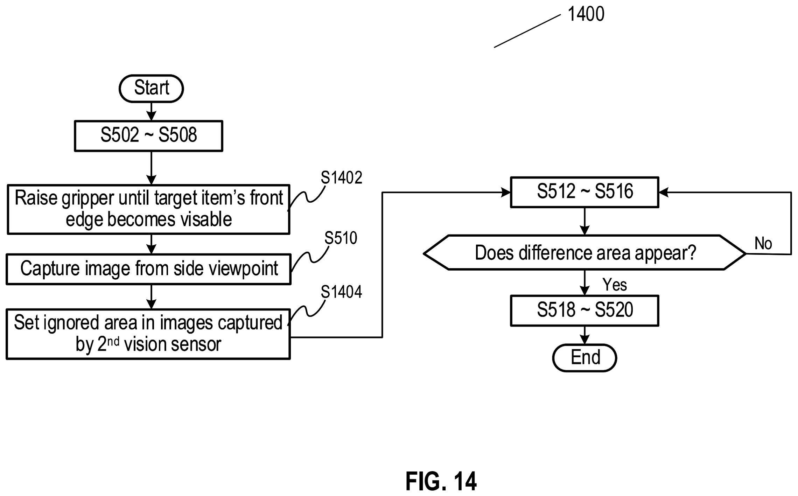

FIG. 14 illustrates an alternate example process flow 1400 for performing object detection and depalletization, in accordance with an example implementation. We can consider another method of knowing the height of the target object's top surface that becomes visible from the second vision sensor. In this method, the system continuously captures images from the second vision sensor while raising the gripper, tries to detect a marker put on bottom parts of side surfaces of the gripper from the captured images, and regards that the front edge of the target object would become visible when the marker is detected.

Steps S502-520 are identical to the same steps performed in FIG. 5. The process begins with steps S502-S508 being performed to grasp a target object. At step S1402, the system begins raising the gripper until the target object's front edge becomes visible to the second vision sensor, and an image is captured from the side view at step S510.

The process then proceeds to step S1404 where the system sets an ignored area in the image captured by the second vision sensor in step S510. The process then proceeds to step S512 where the gripper is raised slightly to allow an "after- movement" image to be captured using the second vision sensor at step S514. At step S516 a determination is made as to whether a difference area appears between the before-movement image and the after-movement image appear. Step S512, and steps S512 to S516 are performed iteratively until a difference area appears.

After the system determines that a difference area has appeared based on the captured side view image in step S516, the system then determines whether the target object's bottom surface would be sufficiently high for moving the target object away without colliding into other objects at step S518. For example, the system can know the height of the tallest surface among remaining objects on the pallet using the depth image or the results of object recognition. If the answer is yes at step S518, then the system stops raising the gripper, and the target object is moved. If the answer is no at step S518, then the gripper is continuously raised until the height of the target object's bottom surface becomes sufficiently high at step S520. Specifically, the gripper is raised until the height of the target object's bottom surface exceeds heights of remaining objects on the pallet.

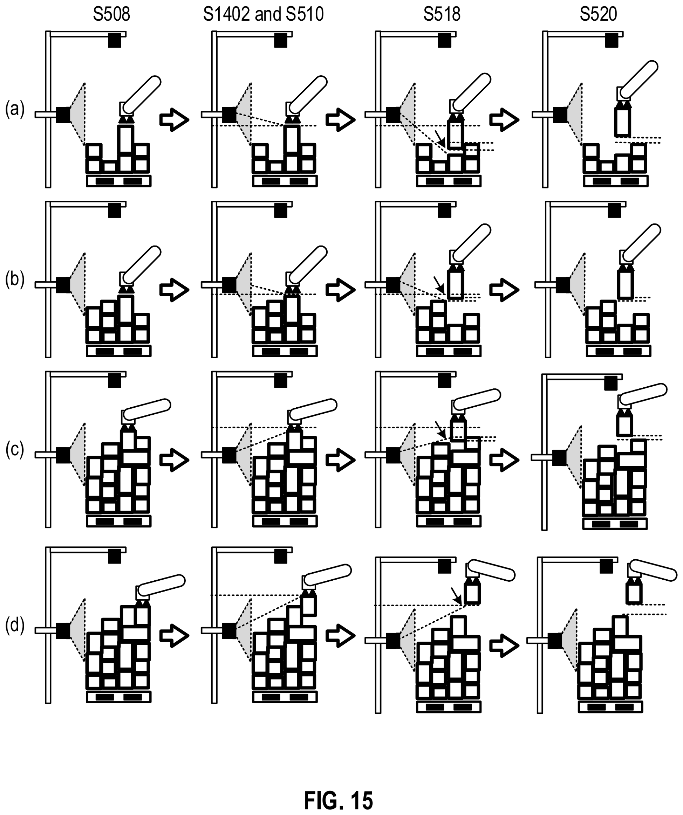

FIG. 15 illustrates example illustrative flows (a)-(d) for performing the process flow 1400, in accordance with an example implementation. Illustrative flows (a)-(d) of FIG. 15 show example depalletization processes with target objects at varying heights and levels of occlusion. The first column shows object grasping for target object at varying heights under step S508 for scenarios (a)-(d). The second column shows moving of the grasped objects under step S1402, and capturing of the first before-movement images at step S510 for scenarios (a)-(d). The third column shows difference area detection of step S518 being performed for scenarios (a)-(d). The fourth column shows raising of target objects at step S520 for scenarios (a)-(d).

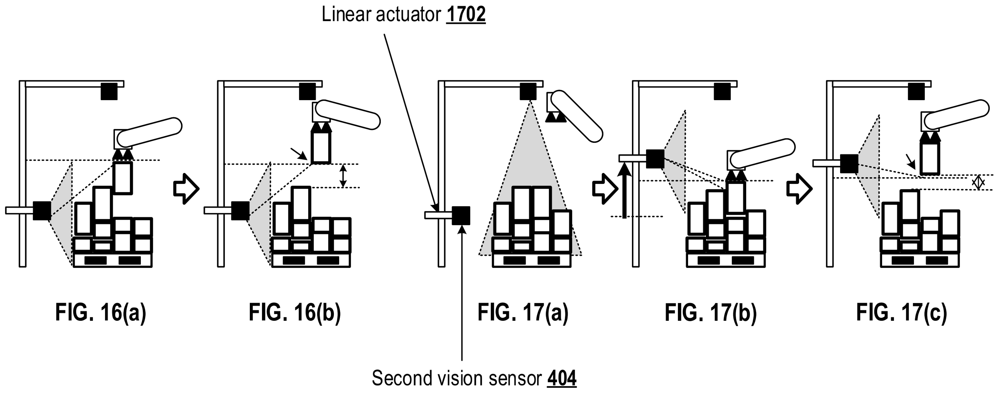

FIGS. 16(a) and 16(b) illustrate an example problem scenario where a difference area cannot be correctly detected based on location of the second vision sensor. As shown in FIG. 16(a), when the second vision sensor is positioned lower than the target object's top surface, the system would then need to raise the target object so that the second vision sensor can detect the difference area. As shown in FIG. 16(b), this may require the target object to be raised to a degree beyond what is possible by the gripper (e.g., due to height or motion restraint). On the other hand, if the second vision sensor is positioned higher than the target object's top surface, this renders difference area detection relatively difficult.

To overcome the problem identified in FIGS. 16(a) and 16(b), a linear actuator/linear slider may be incorporated to facilitate movement of the second vision sensor. FIGS. 17(a), 17(b), and 17(c) illustrate an example system architecture 1700 of a depalletization system utilizing a linear actuator/linear slider, in accordance with an example implementation. By being mounted to a linear actuator 1702, the second vision sensor 404 can be moved vertically along the linear actuator 1702 as shown in FIGS. 17(a), 17(b), and 17(c) to optimize object detection. The combination of the second vision sensor 404 and the linear actuator 1702 allows object detection to be performed by measuring side surfaces of the objects on the pallet.

In some example implementations, a suitable position for the second vision sensor is one that allows both (i) the front edge of the target object's top surface; and (ii) the back edge of an object directly in front of the target object (first front object) to be visible to the second vision sensor. However, due to arrangement of objects, it may not be possible for both conditions to be satisfied.

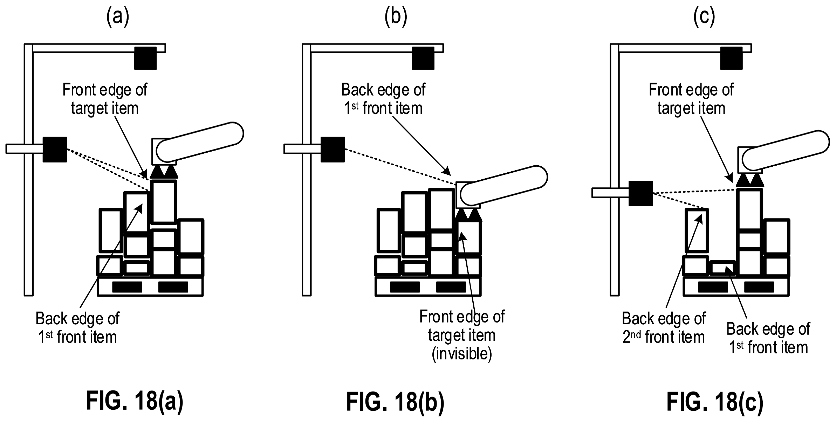

FIG. 18(a) illustrates a first scenario where the second vision sensor is properly positioned/arranged for object detection. As shown in FIG. 18(a), the system moves the second vision sensor to a position where both (i) the front edge of the target object; and (ii) the back edge of an object directly in front of the target object can be observed.

FIG. 18(b) illustrates a second scenario where the second vision sensor is properly positioned/arranged for object detection. While the second vision sensor is able to observe the back edge of the object in front of the target object, there is not a single position where (i) the front edge of the target object; and (ii) the back edge of the object in front of the target object are both visible to the second vision sensor. Specifically, the target object would not be visible due to object occlusion. In a situation like this, the system may take only the back edge of the object in front of the target object into consideration.

FIG. 18(c) illustrates a third scenario where the second vision sensor is properly positioned/arranged for object detection. While the system is able to position the second vision sensor to a location where the front edge of the target object becomes visible, there is not a single position where the back edge of the object in front of the target object would be visible for the second vision sensor. This is due to occlusion caused by the back edge of a preceding object (second front object). In such a situation, the system determines whether a position exists that would make the back edge of the second front object visible to the second vision sensor.

The foregoing example implementation may have various benefits and advantages, such as recognizing a height dimension of a grasped object before moving the object away from the piled objects on a pallet during depalletization. In so doing, unnecessary movements (e.g. object reselection, height recalculation, etc.) can be avoided, which leads to increased depalletization throughput.

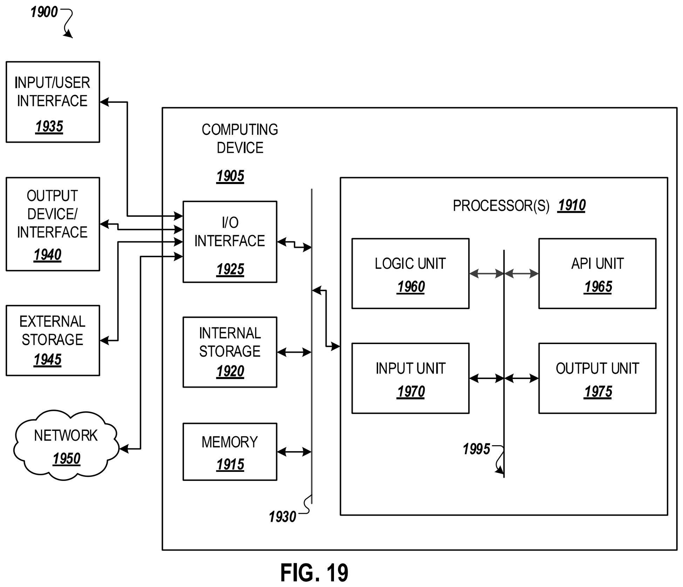

FIG. 19 illustrates an example computing environment with an example computer device suitable for use in some example implementations. Computer device 1905 in computing environment 1900 can include one or more processing units, cores, or processors 1910, memory 1915 (e.g., RAM, ROM, and/or the like), internal storage 1920 (e.g., magnetic, optical, solid-state storage, and/or organic), and/or IO interface 1925, any of which can be coupled on a communication mechanism or bus 1930 for communicating information or embedded in the computer device 1905. IO interface 1925 is also configured to receive images from cameras or provide images to projectors or displays, depending on the desired implementation.

Computer device 1905 can be communicatively coupled to input/user interface 1935 and output device/interface 1940. Either one or both of the input/user interface 1935 and output device/interface 1940 can be a wired or wireless interface and can be detachable. Input/user interface 1935 may include any device, component, sensor, or interface, physical or virtual, that can be used to provide input (e.g., buttons, touch-screen interface, keyboard, a pointing/cursor control, microphone, camera, braille, motion sensor, accelerometer, optical reader, and/or the like). Output device/interface 1940 may include a display, television, monitor, printer, speaker, braille, or the like. In some example implementations, input/user interface 1935 and output device/interface 1940 can be embedded with or physically coupled to the computer device 1905. In other example implementations, other computer devices may function as or provide the functions of input/user interface 1935 and output device/interface 1940 for a computer device 1905.

Examples of computer device 1905 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 1905 can be communicatively coupled (e.g., via IO interface 1925) to external storage 1945 and network 1950 for communicating with any number of networked components, devices, and systems, including one or more computer devices of the same or different configuration. Computer device 1905 or any connected computer device can be functioning as, providing services of, or referred to as a server, client, thin server, general machine, special-purpose machine, or another label.

IO interface 1925 can include but is not limited to, wired and/or wireless interfaces using any communication or IO protocols or standards (e.g., Ethernet, 802.11x, Universal System Bus, WiMax, modem, a cellular network protocol, and the like) for communicating information to and/or from at least all the connected components, devices, and network in computing environment 1900. Network 1950 can be any network or combination of networks (e.g., the Internet, local area network, wide area network, a telephonic network, a cellular network, satellite network, and the like).

Computer device 1905 can use and/or communicate using computer-usable or computer readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid-state media (e.g., RAM, ROM, flash memory, solid-state storage), and other non-volatile storage or memory.

Computer device 1905 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 1910 can execute under any operating system (OS) (not shown), in a native or virtual environment. One or more applications can be deployed that include logic unit 1960, application programming interface (API) unit 1965, input unit 1970, output unit 1975, and inter-unit communication mechanism 1995 for the different units to communicate with each other, with the OS, and with other applications (not shown). The described units and elements can be varied in design, function, configuration, or implementation and are not limited to the descriptions provided. Processor(s) 1910 can be in the form of hardware processors such as central processing units (CPUs) or in a combination of hardware and software units.

In some example implementations, when information or an execution instruction is received by API unit 1965, it may be communicated to one or more other units (e.g., logic unit 1960, input unit 1970, output unit 1975). In some instances, logic unit 1960 may be configured to control the information flow among the units and direct the services provided by API unit 1965, the input unit 1970, the output unit 1975, in some example implementations described above. For example, the flow of one or more processes or implementations may be controlled by logic unit 1960 alone or in conjunction with API unit 1965. The input unit 1970 may be configured to obtain input for the calculations described in the example implementations, and the output unit 1975 may be configured to provide an output based on the calculations described in example implementations.

Processor(s) 1910 can be configured to measure distances between a first sensor and a plurality of objects using the first sensor as shown in FIGS. 4 and 5. The processor(s) 1910 may also be configured to identify a target object of the plurality of objects based on the distances as shown in FIGS. 4 and 5. The processor(s) 1910 may also be configured to control a gripper to grasp the target object as shown in FIGS. 4 and 5. The processor(s) 1910 may also be configured to receive a first image of the plurality of objects from a side view from a second sensor at a first position as shown in FIGS. 4 and 5. The processor(s) 1910 may also be configured to control the gripper to move upward by a predetermined distance as shown in FIGS. 4 and 5. The processor(s) 1910 may also be configured to receive a second image of the plurality of objects from the side view from the second sensor at the first position as shown in FIGS. 4 and 5. The processor(s) 1910 may also be configured to detect existence of a target object difference area between the target object and other objects of the plurality of objects by comparing the first image and the second image as shown in FIGS. 4 and 5. The processor(s) 1910 may also be configured to, for the target object difference area being detected, control the gripper to move the target object to a destination area as shown in FIGS. 4 and 5.

The processor(s) 1910 may also be configured to control the gripper to move upward by the predetermined distance as shown in FIGS. 4 and 5. The processor(s) 1910 may also be configured to receive a subsequent image of the plurality of objects from the side view from the second sensor at the first position as shown in FIGS. 4 and 5. The processor(s) 1910 may also be configured to detect existence of the target object difference area between the target object and the other objects of the plurality of objects by comparing the first image and the subsequent image as shown in FIGS. 4 and 5. The processor(s) 1910 may also be configured to, for the target object difference area being detected, control the gripper to move the target object to the destination area as shown in FIGS. 4 and 5.

The processor(s) 1910 may also be configured to determine whether the target object difference area satisfies a distance threshold as shown in FIGS. 4-5 and 9. The processor(s) 1910 may also be configured to, for the target object difference area being determined to satisfy the distance threshold, control the gripper to move the target object to the destination area as shown in FIGS. 4-5 and 9. The processor(s) 1910 may also be configured to, for the object difference area being determined to be less than the distance threshold, control the gripper to raise the target object upward until the distance threshold is met, and move the target object to the destination area as shown in FIGS. 4-5 and 9.

The processor(s) 1910 may also be configured to calculate a height dimension of the target object as shown in FIG. 8. The processor(s) 1910 may also be configured to receive height information of the destination area as shown in FIG. 8. The processor(s) 1910 may also be configured to adjust height of the gripper based on the height dimension of the target object and the height information of the destination area before moving the target object to the destination area as shown in FIG. 8.

The processor(s) 1910 may also be configured to estimate a height of the gripper through information generated through monitoring of the gripper using the second sensor as shown in FIG. 11. The processor(s) 1910 may also be configured to set an area of the second image that is above the height of the gripper as an ignored area as shown in FIG. 11. The processor(s) 1910 may also be configured to detect visibility of a front edge of the target object using the second sensor after the target object has been grasped by the gripper as shown in FIGS. 13-15.

The processor(s) 1910 may also be configured to move the second sensor from an initial position to the first position, wherein the first position has a height derived by summing a height of the target object as observed by the second sensor with a predetermined height boost value as shown in FIGS. 16-17.

The processor(s) 1910 may also be configured to move the second sensor from an initial position to the first position so that a back edge of an object immediately in front of the target object from the side view becomes visible to the second sensor as shown in FIG. 18.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer readable storage medium or a computer readable signal medium. A computer readable storage medium may involve tangible mediums such as, but not limited to optical disks, magnetic disks, read-only memories, random access memories, solid-state devices, and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general-purpose computer, based on instructions stored on a computer readable medium. If desired, the instructions can be stored on the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope and spirit of the present application being indicated by the following claims.

## Claims

1. A system for object loading recognition associated with a plurality of objects, the system comprising:
a first sensor above the plurality of objects for measuring distances between the first sensor and the plurality of objects;
a second sensor for monitoring the plurality of objects from a side view;
a gripper for grasping the plurality of objects;
a processor; and
a memory coupled to the processor, wherein the memory stores instructions executable by the processor to:
measure the distances using the first sensor;
identify a target object of the plurality of objects based on the distances;
control the gripper to grasp the target object;
capture a first image of the plurality of objects from the side view using the second sensor at a first position;
move the gripper upward by a predetermined distance;
capture a second image of the plurality of objects from the side view using the second sensor at the first position;
detect existence of a target object difference area between the target object and other objects of the plurality of objects by comparing the first image and the second image; and
for the target object difference area being detected, control the gripper to move the target object to a destination area.

2. The system of claim 1, wherein the first image and the second image comprise depth images or intensity images.

3. The system of claim 1, wherein the processor is further configured to:
for the target object difference area not being detected, iteratively perform the following until the target object difference area is detected:
move the gripper upward by the predetermined distance;
capture a subsequent image of the plurality of objects from the side view using the second sensor at the first position; and
detect existence of the target object difference area between the target object and the other objects of the plurality of objects by comparing the first image and the subsequent image; and
for the target object difference area being detected, control the gripper to move the target object to the destination area.

4. The system of claim 3, wherein the control the gripper to move the target object to the destination area comprises:
determine whether the target object difference area satisfies a distance threshold;
for the target object difference area being determined to satisfy the distance threshold, move the target object to the destination area; and
for the object difference area being determined to be less than the distance threshold, raise the target object upward until the distance threshold is met, and move the target object to the destination area.

5. The system of claim 1, wherein the processor is further configured to raise the gripper after the target object has been grasped by the gripper.

6. The system of claim 1, wherein the target object difference area comprises an area between a bottom surface of the target object and an object with a second shortest distance to the first sensor.

7. The system of claim 1, wherein the target object is an object from the plurality of objects having a shortest distance to the first sensor;
wherein the target object difference area comprises an area between a bottom surface of the target object and other objects of the plurality of objects.

8. The system of claim 1, wherein the processor is further configured to:
calculate height dimension of the target object;
receive height information of the destination area; and
adjust height of the gripper based on the height dimension of the target object and the height information of the destination area before moving the target object to the destination area.

9. The system of claim 1,
wherein the second sensor further monitors the gripper from the side view;
wherein the processor is further configured to:
estimate a height of the gripper through information generated through monitoring of the gripper using the second sensor, and
set an area of the second image that is above the height of the gripper as an ignored area; and
wherein the detect the existence of the object difference area between the target object and the other objects of the plurality of objects comprises detect the existence of the object difference area is performed by comparing the first image and an area of the second image that is not the ignored area.

10. The system of claim 1, wherein the processor is further configured to:
detect visibility of a front edge of the target object using the second sensor after the target object has been grasped by the gripper;
wherein the capture the first image of the plurality of objects from the side view using the second sensor at the first position comprises:
for the front edge of the target object being detected, capture the first image of the plurality of objects; and
for the front edge of the target object not being detected:
control the gripper to raise the target object until the second sensor detects the front edge of the target object; and
capture the first image of the plurality of objects.

11. The system of claim 1, further comprising:
a linear slider, wherein the second sensor is coupled to the linear slider and is moved linearly by the linear slider.

12. The system of claim 11, wherein the processor is further configured to:
move the second sensor from an initial position to the first position, wherein the first position has a height derived by summing a height of the target object as observed by the second sensor with a predetermined height boost value.

13. The system of claim 11, wherein the processor is further configured to:
move the second sensor from an initial position to the first position so that a back edge of an object immediately in front of the target object from the side view becomes visible to the second sensor.

14. A method for performing object loading associated with a plurality of objects, the method comprising:
measuring, by a processor, distances between a first sensor and a plurality of objects using the first sensor;
identifying, by the processor, a target object of the plurality of objects based on the distances;
controlling, by the processor, a gripper to grasp the target object;
receiving, by the processor, a first image of the plurality of objects from a side view from a second sensor at a first position;
controlling, by the processor, the gripper to move upward by a predetermined distance;
receiving, by the processor, a second image of the plurality of objects from the side view from the second sensor at the first position;
detecting, by the processor, existence of a target object difference area between the target object and other objects of the plurality of objects by comparing the first image and the second image; and
for the target object difference area being detected, controlling, by the processor, the gripper to move the target object to a destination area.

15. The method of claim 14, further comprising:
for the target object difference area not being detected, iteratively performing the following until the target object difference area is detected:
controlling, by the processor, the gripper to move upward by the predetermined distance;
receiving, by the processor, a subsequent image of the plurality of objects from the side view from the second sensor at the first position; and
detecting, by the processor, existence of the target object difference area between the target object and the other objects of the plurality of objects by comparing the first image and the subsequent image; and
for the target object difference area being detected, controlling, by the processor, the gripper to move the target object to the destination area.

16. The method of claim 15, wherein the controlling the gripper to move the target object to the destination area comprises:
determining whether the target object difference area satisfies a distance threshold;
for the target object difference area being determined to satisfy the distance threshold, moving the target object to the destination area; and
for the object difference area being determined to be less than the distance threshold, raising the target object upward until the distance threshold is met, and moving the target object to the destination area.

17. The method of claim 14, wherein the target object is an object from the plurality of objects having a shortest distance to the first sensor;
wherein the target object difference area comprises an area between a bottom surface of the target object and other objects of the plurality of objects.

18. The method of claim 14, further comprising:
calculating, by the processor, a height dimension of the target object;
receiving, by the processor, height information of the destination area; and
adjusting, by the processor, height of the gripper based on the height dimension of the target object and the height information of the destination area before moving the target object to the destination area.

19. The method of claim 14, further comprising:
estimating, by the processor, a height of the gripper through information generated through monitoring of the gripper using the second sensor, and
setting, by the processor, an area of the second image that is above the height of the gripper as an ignored area;
wherein the detecting the existence of the object difference area between the target object and the other objects of the plurality of objects comprises detect the existence of the object difference area is performed by comparing the first image and an area of the second image that is not the ignored area.

20. The method of claim 14, further comprising:
detecting, by the processor, visibility of a front edge of the target object using the second sensor after the target object has been grasped by the gripper;
wherein the receiving the first image of the plurality of objects from the side view using the second sensor at the first position comprises:
for the front edge of the target object being detected, capturing an image of the plurality of objects as the first image; and
for the front edge of the target object not being detected:
controlling the gripper to raise the target object until the second sensor detects the front edge of the target object; and
capturing an image of the plurality of objects as the first image.
